# EUROPÄISCHE PATENTSCHRIFT

(11) **EP 4 326 999 B1**
(45) Veröffentlichungstag und Bekanntmachung des Hinweises auf die Patenterteilung: **31.12.2025**
(21) Anmeldenummer: 22723991.0
(22) Anmeldetag: 13.04.2022
(51) Int. Cl.: F16H 57/01, G01M 13/00, G05B 19/00, F16H 19/04, F16H 57/12, G01M 13/021

(54) **VERFAHREN UND BEARBEITUNGSMASCHINE ZUR ERMITTLUNG DES ZUSTANDES EINES RITZEL-ZAHNSTANGENANTRIEBS FÜR EINE VERFAHRBARE ACHSE**
METHOD AND HANDLING MACHINE FOR DETERMINING THE STATE OF A RACK AND PINION PROPULSION FOR A TRAVELABLE AXIS
PROCÉDÉ ET MACHINE D'USINAGE POUR DÉTERMINER L'ÉTAT D'UNE PROPULSION PIGNON ET CRÉMAILLÈRE POUR UN AXE DE PARCOURS

(30) Priorität: 19.04.2021 DE 102021109812
(43) Veröffentlichungstag der Anmeldung: 28.02.2024
(73) Patentinhaber: TRUMPF Laser- und Systemtechnik SE, 71254 Ditzingen (DE)
(72) Erfinder: HAGENLOCHER, Tobias, 71254 Ditzingen (DE); KIEWELER, Thomas, 71299 Wimsheim (DE)
(74) Vertreter: Trumpf Patentabteilung
(86) Internationale Anmeldenummer: PCT/EP2022/059870
(87) Internationale Veröffentlichungsnummer: WO 2022/223392

(56) Entgegenhaltungen:
- EP-A1- 3 786 491
- DE-A1- 102016 222 660

## Beschreibung

Die Erfindung betrifft ein Verfahren zur Ermittlung des Zustandes eines Ritzel-Zahnstangenantriebs für eine verfahrbare Achse in einer Bearbeitungsmaschine sowie eine Bearbeitungsmaschine.

Zur Bearbeitung von Werkstücken werden Bearbeitungsmaschinen eingesetzt, bei welchen zumindest eine verfahrbare Achse vorgesehen ist, entlang der ein Bearbeitungskopf verfahrbar ist, um für die Bearbeitung des Werkstückes ein Bearbeitungswerkzeug, wie beispielsweise ein Stanzwerkzeug oder einen Laserstrahl, auf das Werkstück zu richten. Solche Achsen in Bearbeitungsmaschinen können einseitig oder beidseitig gelagert und angetrieben werden. Zum Antrieb solcher Achsen wird ein Ritzel-Zahnstangenantrieb eingesetzt. Für die Präzision bei der Bearbeitung von Werkstücken ist die Spieleinstellung zwischen dem Ritzel und der Zahnstange des Ritzel-Zahnstangenantriebs als auch eine Überwachung des Zustandes erforderlich, um die Arbeitspositionen durch die zumindest eine Achse zur Herstellung des Werkstücks exakt anzufahren. Die Erfassung einer Justage des Ritzel-Zahnstangenantriebs sowie weitere Einflussfaktoren erfolgen mit Hilfe von separaten Messmitteln manuell an einzelnen Messpunkten.

Aus der DE 10 2016 222 660 A1 ist eine Technik zum Erkennen von Abweichungen und/oder Veränderungen in wenigstens einem Betriebszustand eines elektrisch, insbesondere elektromotorisch, betriebenen Antriebs - beispielsweise eines Ritzel-Zahnstangenantriebs - bekannt geworden.

Der vorliegenden Erfindung liegt die Aufgabe zugrunde, ein gegenüber dem Stand der Technik verbessertes Verfahren und eine Bearbeitungsmaschine vorzuschlagen, sodass eine automatisierte Ermittlung des Zustandes eines Ritzel-Zahnstangenantriebs für eine präzise Bearbeitung von Werkstücken ermöglicht wird.

Diese Aufgabe wird durch ein Verfahren zur Ermittlung des Zustandes eines Ritzel-Zahnstangenantriebs für eine verfahrbare Achse in einer Bearbeitungsmaschine gelöst, bei dem zumindest eine Messfahrt einer verfahrbaren Achse über den gesamten Arbeitsbereich einer Linearachse durchgeführt wird, bei dem die Messfahrt durch eine Verfahrbewegung der Achse mit einer konstanten Vorschubgeschwindigkeit in zumindest eine Bewegungsrichtung der Linearachse angesteuert wird, bei dem während der Messfahrt die Signale in Abhängigkeit der Achspositionen erfasst werden und bei dem die erfassten Signale in Abhängigkeit der Achspositionen in einer Datenverarbeitungseinrichtung ausgewertet und mittels eines mathematischen Verfahrens, wie beispielsweise einem Bildbearbeitungsalgorithmus, analysiert werden. Dies kann auch durch Bildverarbeitung geschehen. Durch dieses Verfahren ist nicht nur eine Messung an einzelnen zufällig ausgewählten Positionen innerhalb des Arbeitsbereiches der verfahrbaren Achse entlang der Linearachse gegeben, sondern es wird der Zustand des Ritzel-Zahnstangenantriebs über den gesamten Arbeitsbereich der verfahrbaren Achse in Bezug auf die Linearachse erfasst. Des Weiteren ist durch die zumindest eine Messfahrt mit einer konstanten Vorschubgeschwindigkeit der Vorteil gegeben, dass während dieser Messfahrt bezüglich der Verfahrgeschwindigkeit dieselben Verhältnisse entlang des gesamten Arbeitsbereiches bestehen, sodass einzelne Abweichungen von einem Ist- oder Idealzustand durch eine entsprechende Signaländerung erkannt und bezogen auf die jeweilige Achsposition in einer Anzeige ausgegeben werden kann. Dadurch wird ein standardisiertes und schnelles Messverfahren mit einer Aussage über den Zustand des Ritzel-Zahnstangengetriebes für den gesamten Arbeitsbereich ermöglicht. Zudem sind die erfassten Signale und die daraus resultierenden Aussagen für den gesamten Arbeitsbereich reproduzierbar. Insbesondere können die in der Bearbeitungsmaschine bereits vorhandenen Komponenten und Daten für die Ermittlung des Zustandes verwendet und aufbereitet werden.

Erfindungsgemäß wird während der einen Messfahrt eine Verfahrbewegung der verfahrbaren Achse in beide Bewegungsrichtungen der Linearachse jeweils über den gesamten Arbeitsbereich angesteuert. Somit wird die verfahrbare Achse über die gesamte Länge der Linearachse sowohl in die eine Bewegungsrichtung als auch in die entgegengesetzte Bewegungsrichtung vollständig verfahren. Dabei werden die Signale zeitsynchron zu den Achspositionen erfasst. Ferner erfolgt ein Vergleich der Messsignale, welche aus den beiden Bewegungsrichtungen erfasst wurden. Diese Messfahrt ermöglicht eine weitere Analyse von Zuständen oder Fehlern, die beispielsweise auch nur in einer Richtung auftreten, jedoch in entgegengesetzter Richtung nicht. Dies kann beispielsweise bei einem fehlerhaft montierten Faltenbalg der Fall sein, der in der einen Bewegungsrichtung eine Verhakung verursacht, jedoch in der anderen Bewegungsrichtung nicht. Darüber hinaus kann bei einer solchen Messfahrt auch ein Umkehrspiel, insbesondere dessen qualitative Änderung, zwischen dem Ritzel und der Zahnstange des Ritzel-Zahnstangenantriebs verbessert ausgewertet werden, da ein Vergleich der aufgezeichneten Messdaten aus beiden Verfahrrichtungen möglich ist.

Des Weiteren werden bevorzugt mehrere Messfahrten aufeinanderfolgend angesteuert und jede der Messfahrten mit einer eigenen und von der vorausgegangenen Messfahrt abweichenden Vorschubgeschwindigkeit angesteuert. Dies ermöglicht eine weitere Aussage über den Zustand des Ritzel-Zahnstangenantriebs, wie beispielsweise auftretende Schwingungen oder Eigenfrequenzen bei verschiedenen Achsgeschwindigkeiten, die während der Bearbeitung eines Werkstückes oder auch zwischen zwei Bearbeitungsschritten entstehen können.

Während der zumindest einen Messfahrt wird bevorzugt als Signal in Abhängigkeit der Achsposition ein momentenbildender Arbeitsstrom eines Motors, der ein Ritzel des Ritzel-Zahnstangenantriebs antreibt, erfasst. Auch kann ein zwischen Motor und Ritzel eingesetztes Getriebe mit berücksichtigt werden. Durch diesen Antriebsstrom kann eine unmittelbare Rückkopplung auf den Zustand der Ritzel-Zahnstangen-Paarung erfolgen.

Insbesondere wird zusätzlich zum Antriebsstrom die Drehzahl des Motors in Abhängigkeit der Achsposition zeitsynchron erfasst. Diese Drehzahl kann einen weiteren Auswerteparameter für die Zustandserfassung darstellen. Des Weiteren kann zusätzlich zumindest ein weiteres Messsignal beispielsweise mit einem Beschleunigungssensor oder einem direkten Wegmesssystem oder dergleichen erfasst werden.

Gemäß einer weiteren vorteilhaften Ausgestaltung des Verfahrens werden bei der Auswertung der Signale der Messfahrt mit einer konstanten Vorschubgeschwindigkeit die Signale einer Beschleunigungsphase und einer Bremsphase zu Beginn und am Ende des Achsbereichs nicht erfasst. Aufgrund der transienten Beschleunigungs- oder Bremsphase können nicht reproduzierbare Signale entstehen, welche die Zustandserfassung nachteilig beeinflussen oder zumindest deutlich erschweren.

Während einer Messfahrt werden bevorzugt momentane Messwerte des Antriebsstromes des Motors des Ritzel-Zahnstangenantriebs erfasst und in Abhängigkeit der Achsposition aufgezeichnet. Die einzeln erfassten Abschnitte können zu einer Gesamtmessung zusammengesetzt werden. Die Analyse kann nur für einzelne Abschnitte oder für die aus den Abschnitten bestehende Gesamtmessung erfolgen. Eine detaillierte Auflösung der Signale entlang der Linearachse kann erfolgen. Vorzugsweise wird der Eingriff eines Zahnes des Ritzels in die Zahnstange durch die örtliche Periodizität entsprechend zur Achsposition erfasst und aufgezeichnet. Dies ermöglicht eine Erfassung des Zustandes von jedem einzelnen Zahn als auch die Erfassung eines Rundlaufes des Antriebsritzels durch eine periodische Zuordnung über dem Umfang des selbigen.

Insbesondere wird die periodische Zuordnung über den Umfang des Antriebsritzels, vorzugsweise in Form von Amplituden, die aus einer Umdrehung des Ritzels resultieren, in einer Farbe ausgegeben, die von der vorherigen abweicht. Dadurch können entlang einer Messfahrt eine Vielzahl von Farbmustern in einer Anzeige dargestellt werden, wodurch optisch in einfacher Weise erkennbar wird, ob und inwieweit der jeweiligen Achsposition zugeordnet eine Umdrehung des Zahnritzels von der benachbarten oder den weiteren Umdrehungen des Zahnritzels abweicht. Beispielsweise kann bei einer vergrößerten Amplitude innerhalb einer Sequenz von Amplituden, die für eine Umdrehung des Ritzels aufgezeichnet werden, beispielsweise bei der dritten Amplitude, festgestellt werden, dass der dritte Zahn einem Verschleiß unterliegt, anderweitig beschädigt ist oder gegebenenfalls einen Zahnbruch umfasst. Dies entspricht einer räumlichen Anordnung der Messwerte über dem Umfang des Antriebsritzels.

Darüber hinaus kann beispielsweise bei einer Betrachtung über den gesamten Arbeitsbereich der Linearachse erkannt werden, ob in einzelnen Abschnitten oder Arbeitsbereichen ein vergrößerter Verschleiß oder eine Beschädigung oder eine Fehljustage von aneinandergereihten Zahnstangensegmenten gegeben ist, sofern mehrere aneinandergereihte Amplituden einen anderen Wert als die benachbarten Werte aufweisen. Dieser punktuell oder bereichsweise vergrößerte Verschleiß kann sich dann einstellen, wenn die Bearbeitung von Werkstücken über eine längere Zeitdauer immer mit der gleichen Verfahrstrecke und somit denselben Umkehrpunkten angesteuert wird, wie dies beispielsweise bei einer Serienproduktion oder Massenanfertigung der Fall ist.

Eine weitere bevorzugte Ausgestaltung des Verfahrens sieht vor, dass durch das mathematische Verfahren eine Einhüllende aus den oberen und unteren Messwerten von den erfassten Amplituden des Antriebsstromes ermittelt und beispielsweise in der Anzeige ausgegeben wird. Vorzugsweise wird eine obere und untere Gerade aus den statistischen Kenngrößen der Extremwerte der oberen und unteren Messwerte der Amplituden gebildet, die zum Vergleich zur Einhüllenden ebenfalls dargestellt werden. Dadurch sind einzelne Ereignisse entlang des gesamten Arbeitsbereiches unmittelbar erkennbar und/oder mathematisch erfassbar. Diese können beispielsweise einen Hinweis darauf geben, dass zwischen dem Ritzel und den Zahnstangen lokale Fehlstellen gegeben sind, die außerhalb des vorgegebenen Toleranzbereiches sind und die geforderte Genauigkeit in der Bearbeitung der Maschine nicht mehr gewährleisten würden. Somit kann die Lage der zu überprüfenden Position der Ritzel-Zahnstangenpaarung unmittelbar aufgezeigt werden und weitere geeignete Maßnahmen zur Reparatur ergriffen werden.

Zur Ermittlung eines Verschleißes oder zur Erstellung einer Vorhersage, wann mit einem nicht mehr akzeptierbaren Verschleiß zu rechnen sein wird, kann die erste und zumindest eine weitere Messfahrt in zeitlichen Abständen, insbesondere täglich, wöchentlich, monatlich und/oder jährlich, durchgeführt werden. Durch den Vergleich der Amplituden über den gesamten Arbeitsbereich kann eine Zustandsänderung erfasst und prognostiziert werden. Somit kann beispielsweise vorausschauend auf eine Wartung hingewiesen und diese durchgeführt werden, um einen Fehlerfall während einer Produktionsphase zu vermeiden.

Bevorzugt werden beim vorstehenden Verfahren als Zustand oder als Zustandsänderung ein Zahnbruch, ein Rundlauffehler, ein Umkehrspiel, ein Montagefehler beim Übergang von zwei aneinandergereihten Zahnstangen und/oder ein Montagefehler an einer weiteren Komponente erfasst und ausgewertet. Diese Erfassung von Zuständen oder Zustandsänderungen kann bevorzugt in der Datenverarbeitungseinrichtung der Bearbeitungsmaschine implementiert sein. Bevorzugt kann zur Analyse von Daten eine Interpolation der Messdaten in ein vorgegebenes Wegraster erfolgen. Dadurch kann eine Messfahrt zur Ermittlung des Zustandes auch während Stillstandzeiten der Bearbeitungsmaschine durchgeführt werden. Darüber hinaus kann eine solche Zustandsüberwachung als Digitaler-/Smart-Service für den Betreiber dienen. Auch ist dadurch eine Ferndiagnose möglich.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination angewandt werden. zeigen:
- Figur 1: eine perspektivische Ansicht einer Bearbeitungsmaschine zum Bearbeiten von plattenförmigen Werkstücken,
- Figur 2: eine schematisch vergrößerte Ansicht einer mit einer Antriebsvorrichtung verfahrbaren Achse,
- Figur 3: ein Diagramm zur Darstellung eines Motorstroms über einem gesamten Arbeitsbereich einer Linearachse, entlang welcher die verfahrbare Achse ansteuerbar ist,
- Figur 4: einen Ausschnitt der Darstellung gemäß Figur 3 in einer höheren Auflösung,
- Figur 5: ein Diagramm zur Darstellung eines Motorstroms über einem Abschnitt des Arbeitsbereichs bei einer Inbetriebnahme der Bearbeitungsmaschine,
- Figur 6: ein Diagramm zur Darstellung des Motorstroms über einem Abschnitt des Arbeitsbereichs nach einer längeren Betriebsdauer der Bearbeitungsmaschine,
- Figur 7: eine schematische Darstellung des Motorstroms über dem gesamten Arbeitsbereich mit einem lokalen Fehler,
- Figur 8: ein weiteres Diagramm des Motorstroms über dem gesamten Arbeitsbereich der Darstellung eines weiteren Fehlers, und
- Figur 9: ein weiteres Diagramm des Motorstroms über dem gesamten Arbeitsbereich mit einem Fehler im Umkehrspiel.

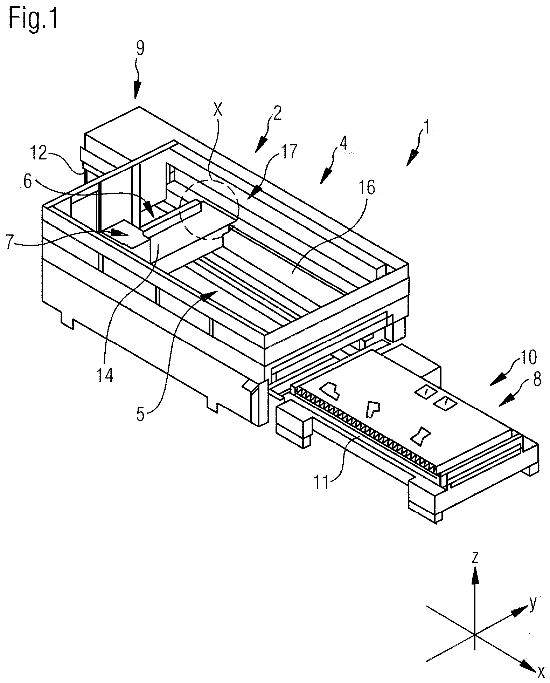

In Figur 1 ist perspektivisch eine Anlage 1 zur trennenden Bearbeitung von plattenförmigen Werkstücken 8 dargestellt, die beispielsweise aus Metall bestehen. Die Anlage 1 umfasst eine Bearbeitungsmaschine 2. Diese Bearbeitungsmaschine 2 wird durch eine Umhausung 4 umgeben. Innerhalb der Umhausung 4 ist eine Bearbeitungsstation 5 vorgesehen, in der eine Linearachsenanordnung 6 zumindest einen Bearbeitungskopf 7 aufnimmt, der innerhalb einer horizontalen Bewegungsebene verfahrbar angesteuert ist. Außerhalb der Umhausung 4 ist beispielsweise eine Be- und Entladestation 10 vorgesehen. Diese umfasst wenigstens eine verfahrbare Palette 11, auf welcher das plattenförmige Werkstück 8 zur Bearbeitung aufgelegt ist, um dieses der Bearbeitungsstation 5 zuzuführen. Nach dem Bearbeiten wird das bearbeitete plattenförmige Werkstück 8 mittels der Palette 11 wieder in die Be- und Entladestation 10 verfahren, um die Palette 11 zu entladen.

Die Bearbeitungsmaschine 2 kann beispielsweise als eine Laserschneidanlage ausgebildet sein. Alternativ kann die Bearbeitungsmaschine 2 auch als eine Plasmaschneidmaschine, eine Stanzlasermaschine, eine Laserschweißmaschine oder eine Stanzmaschine ausgebildet sein.

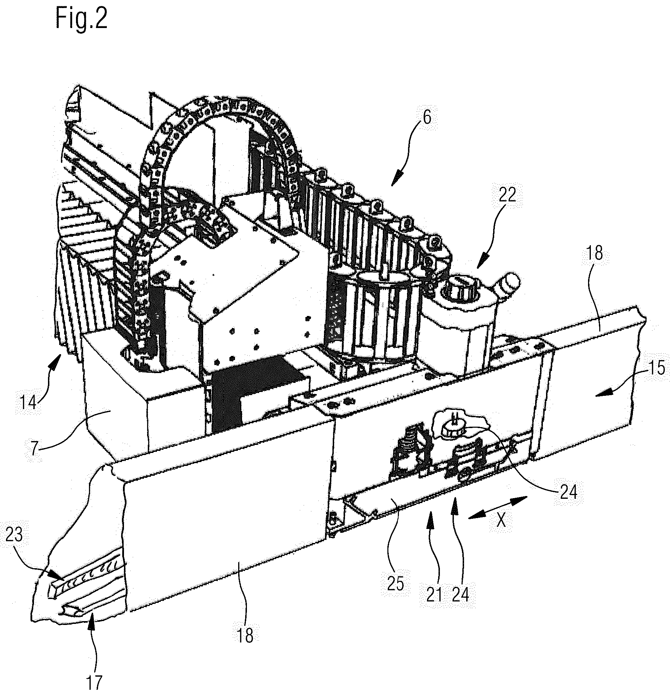

In Figur 2 ist eine schematisch vergrößerte Ansicht des Details X in Figur 1 dargestellt. Die Linearachsenanordnung 6 umfasst als Maschinenkomponente eine verfahrbare Achse 14, welche an einem Maschinengrundkörper 16 entlang einer Linearachse 15 in und entgegen einer X-Richtung verfahrbar angesteuert ist. Der Bearbeitungskopf 7 ist entlang der Achse 14 in Y-Richtung verfahrbar angesteuert. Zur Ansteuerung einer Verfahrbewegung entlang des Maschinengrundkörpers 16 ist eine Antriebsvorrichtung 21, insbesondere ein Ritzel-Zahnstangenantrieb, vorgesehen. Durch diesen Ritzel-Zahnstangenantrieb 21 kann die Achse 14 entlang einer am Maschinengrundkörper 16 angeordneten Führung 17 der Linearachse 15 in und entgegen der X-Richtung verfahren werden. Diese Führung 17 ist an dem Maschinengrundkörper 16 befestigt. Benachbart zur Führung 17 ist eine Zahnstange 23 ausgerichtet. Die Zahnstange 23 ist ebenfalls an dem Maschinengrundkörper 16 befestigt. Ein Motor 22 und ein an der Motorwelle angeordnetes Ritzel 24 des Ritzel-Zahnstangenantriebes 21 werden zusammen mit der Achse 14 entlang der Führung 17 verfahren. Links und rechts an dem Ritzel-Zahnstangenantrieb 21 angrenzend sind schematisch Faltenbälge 18 zum Schutz der Zahnstange 23 und der Führung 17 vor Verschmutzungen vorgesehen.

Dieser Ritzel-Zahnstangenantrieb 21 kann alternativ zur Ansteuerung der verfahrbaren Achse 14 auch weitere Maschinenkomponenten verfahrbar zum Maschinengrundkörper 16 ansteuern.

Alternativ kann die Linearachsenanordnung 6 in einer nicht näher dargestellten Bearbeitungsmaschine durch eine einseitig gelagerte, verfahrbare Achse 14 ausgebildet sein, an welcher der Bearbeitungskopf 7 vorgesehen ist. Diese verfahrbare Achse 14 ist in und entgegen der X-Richtung entlang der Führung 17 verfahrbar, wie dies obenstehend bereits ausgeführt ist.

Zur Ansteuerung der Anlage 1 ist eine Datenverarbeitungseinrichtung 9 vorgesehen, welche ein mathematisches Verfahren bzw. mathematische Operationen umfasst, um Signale für eine Zustandserfassung der Bearbeitungsmaschine 2 zu analysieren und vorzugsweise in einer Anzeige 12 auszugeben. Diese Anzeige 12 kann an der Umhausung 4 vorgesehen sein. Diese Anzeige 12 kann auch separat zur Umhausung 4 an einer Steuersäule vorgesehen sein. Ebenso können weitere mobile Anzeigegeräte, wie beispielsweise mobile Telefone, Tablets oder dergleichen, vorgesehen sein, welche mit der Datenverarbeitungseinrichtung 9, insbesondere drahtlos, kommunizieren und die Anzeige 12 umfassen. Die Datenverarbeitungseinrichtung 9 kann auch außerhalb der eigentlichen Maschinensteuerung liegen, beispielsweise in Form eines Cloudbetriebs.

Zur Ermittlung eines Zustandes des Ritzel-Zahnstangenantriebs 21 werden Daten oder Signale von der Bearbeitungsmaschine 2 erfasst und in der Datenverarbeitungseinrichtung 9 bearbeitet und ausgewertet. Bei diesen Signalen kann es sich beispielsweise um einen Antriebsstrom beziehungsweise Motorstrom, insbesondere momentenbildenden Antriebsstrom, des Motors 22 vom Ritzel-Zahnstangenantrieb 21 handeln. Ergänzend kann als weiteres Signal auch die Drehzahl des Motors 22 erfasst werden, oder jedes andere zur Analyse geeignete Signal (bspw. synchron aufgezeichnete Werte eines externen Sensors, z.B. Beschleunigungssensor). Diese Aufzeichnung kann auch mit einer separaten Datenerfassungseinheit erfolgen, indem die Signale später der jeweiligen Achsposition zugeordnet, oder wahlweise interpoliert werden. Diese Signale werden über den gesamten Arbeitsbereich beziehungsweise Verfahrbereich der Linearachse 15 erfasst. Der gesamte Arbeitsbereich umfasst die Länge der Linearachse 15, entlang welcher der Ritzel-Zahnstangenantrieb 21 in der Umhausung 4, insbesondere der Bearbeitungsmaschine 2, verfahrbar ist. Entlang der Länge der Linearachse 15 sind ein oder mehrere Zahnstangen aneinandergereiht vorgesehen. Die von der Datenverarbeitungseinrichtung 9 aufgenommenen Signale werden zeitsynchron und ortsgebunden erfasst und verarbeitet, sodass jedes Signal einer definierten Position entlang der Linearachse 15 zugeordnet ist.

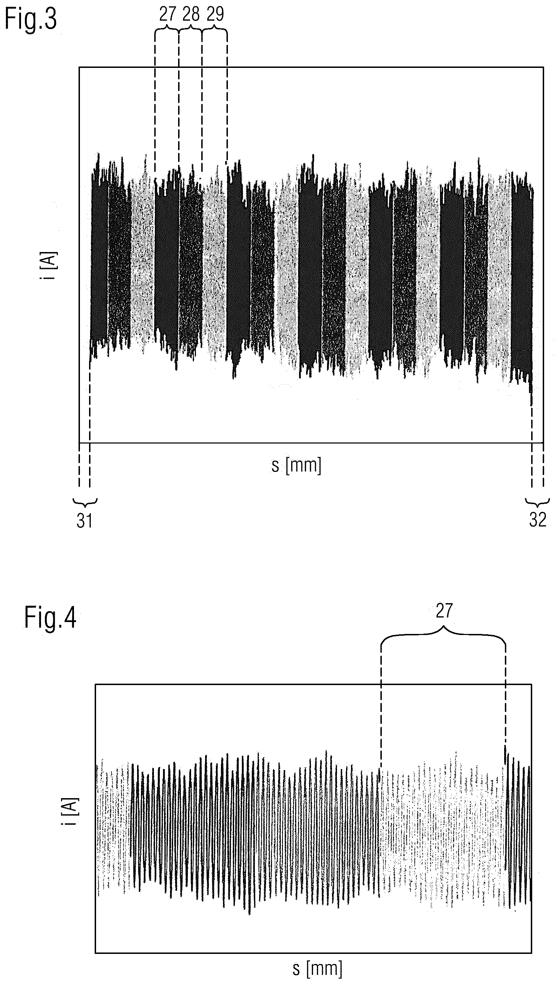

In Figur 3 ist eine schematische Darstellung eines Diagramms gezeigt, bei dem entlang der X-Achse der Verfahrweg des gesamten Arbeitsbereiches der Linearachse 15 aufgetragen ist. Entlang der Y-Achse ist ein Antriebsstrom in Ampere des Motors 22 aufgetragen. Die dort dargestellten und aneinandergereihten Amplituden zeigen ein homogenes Bild entlang des gesamten Arbeitsbereiches. Dieses Diagramm weist aneinandergereiht eine Vielzahl von Amplituden auf, die beispielsweise in einzelne Sequenzen 27, 28, 29 untergliedert sind. Diese können beispielsweise eine farblich voneinander abweichende Darstellung umfassen. Jede Sequenz 27, 28, 29 zeigt eine vollständige Umdrehung eines Ritzels 24, welches entlang der Zahnstange 23 verfahren wird.

In Figur 4 ist beispielsweise die Sequenz 27 vergrößert dargestellt. Jede Amplitude innerhalb der Sequenz 27 steht für einen Zahn des Ritzels 24, wobei jede Amplitude einer definierten Achsposition entlang des Arbeitsbereiches zugeordnet ist. Dadurch kann eine Auswertung des Zustandes von jedem einzelnen Zahn des Ritzels 24 bezüglich der Zahnstange 23 am jeweiligen Ort erfolgen.

Die Aufzeichnung der Amplituden gemäß Figur 3 über den gesamten Arbeitsbereich zeigt, dass eine Beschleunigungsphase 31 und eine Bremsphase 32 zu Beginn und am Ende des Arbeitsbereiches nicht erfasst wird. Dazwischenliegend wird die Verfahrbewegung der verfahrbaren Achse mit einer konstanten Vorschubgeschwindigkeit angesteuert. Sofern über den gesamten Arbeitsbereich gleichbleibende Verhältnisse bezüglich der Amplituden gegeben sind, folgt die Schlussfolgerung, dass kein oder ein gleichmäßiger Verschleiß bei dem Ritzel-Zahnstangenantrieb 21 gegeben ist.

Zur Erfassung der Signale, insbesondere Amplituden, wird eine Messfahrt der verfahrbaren Achse 14 über den gesamten Arbeitsbereich entlang der Linearachse 15 in Plus-X-Richtung und entgegengesetzt in Minus-X-Richtung angesteuert oder umgekehrt. Bei der Darstellung in Figur 3 sind die Signale der Messfahrt in und entgegen der Linearachse 15 über den gesamten Arbeitsbereich ineinanderliegend dargestellt.

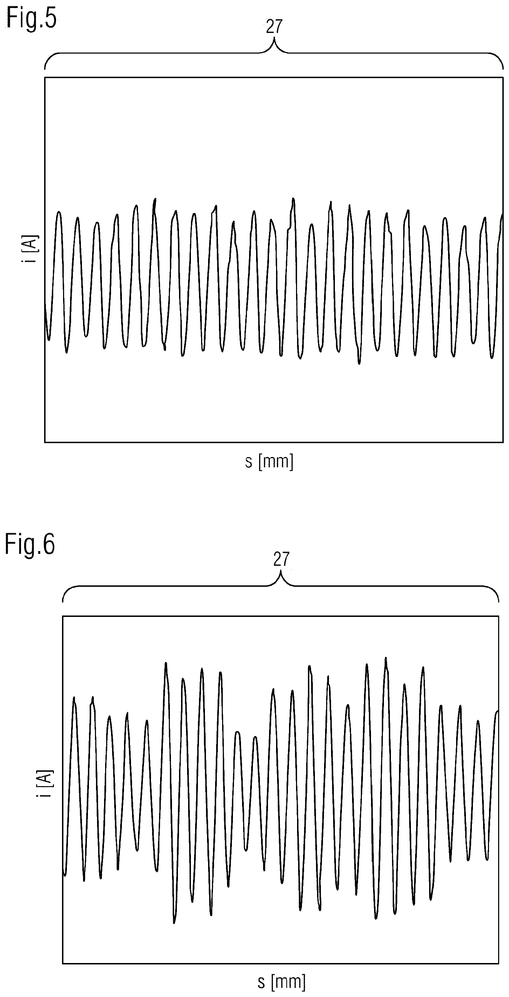

Figur 5 zeigt eine schematisch vergrößerte Darstellung der Sequenz 27 in Figur 4. Die oberen und unteren Messwerte der Amplituden verlaufen sehr homogen und liegen in einem sehr schmalen Bandbereich. Diese Auswertung der erfassten Signale zeigt beispielsweise, dass kein erkennbarer Rundlauffehler des Ritzels 24 zu der einen Zahnstange 23 während der einen Umdrehung des Ritzels gegeben ist. Dieser Zustand der Bearbeitungsmaschine 2 kann insbesondere unmittelbar bei der ersten Inbetriebnahme erfasst werden.

Im Vergleich hierzu ist gemäß Figur 6 ein Diagramm bezüglich derselben Achsposition im Arbeitsbereich zu Figur 5 dargestellt. Ebenso ist die analoge Sequenz 27 aus den erfassten Signalen dargestellt. Aufgrund der oberen und unteren erfassten Messwerte der Amplituden ist ersichtlich, dass diese gegenüber denjenigen in Figur 5 eine größere Streuung aufweisen. Diese in Figur 6 dargestellte Messung ist nach einer längeren Inbetriebnahme der Bearbeitungsmaschine 2 erfolgt. Aufgrund den Abweichungen, beispielsweise der Streuung der Amplituden, gegenüber den Amplituden in Figur 5 wird ein Fehler im Rundlauf des Ritzels 24 zur Zahnstange 23 erfasst. Dieser Zustand kann beispielsweise durch einen Vergleich zwischen der Sequenz 27 in Figur 5 und der Sequenz 27 in Figur 6 erfasst werden, indem beispielsweise die oberen und unteren Messwerte der Amplituden jeweils einen Mittelwert bilden und zu diesem oberen und unteren Mittelwert jeweils eine Streubreite festgelegt wird, innerhalb der die oberen und unteren Messwerte der Amplitude für einen ordnungsgemäßen Rundlauf liegen müssen. Bei der Sequenz 27 gemäß Figur 6 liegen einzelne obere und untere Messwerte der jeweiligen Amplitude außerhalb eines solchen Streubereiches. Dadurch kann der Zustand ermittelt werden, dass der Rundlauf außerhalb der Toleranz liegt.

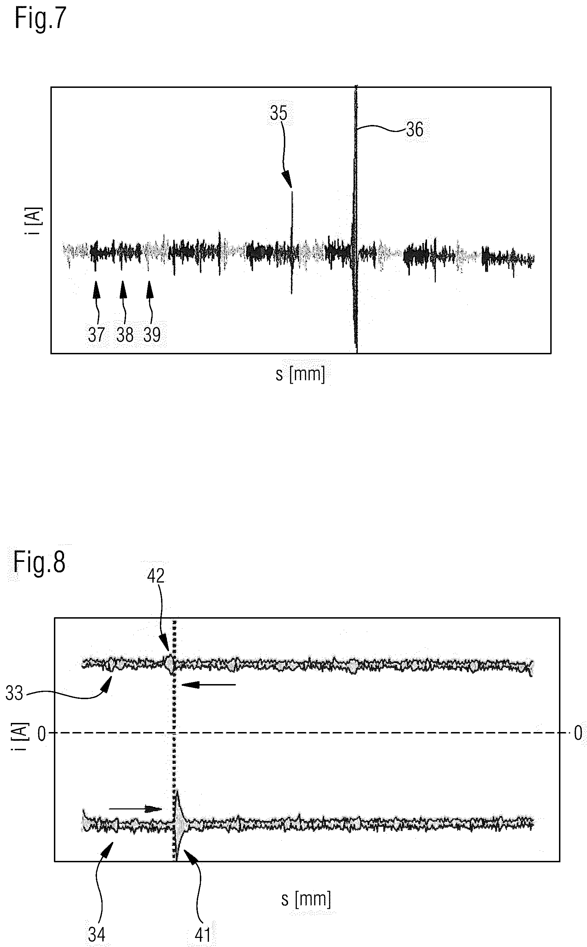

Figur 7 zeigt eine weitere Auswertung der erfassten Signale zur Zu-standsermittlung des Ritzel-Zahnstangenantriebs 21. Bei dieser Darstellung ist die Messfahrt in und entgegen der Bewegungsrichtung der Linearachse 15 in einer gemeinsamen Kennlinie entlang einer Nullachse in Y-Richtung aufgetragen. Die einzelnen Amplituden sind wiederum positionsgenau zur X-Achse über den gesamten Arbeitsbereich aufgetragen. In diesem Diagramm sind beispielsweise zwei lokale Fehler 35, 36 dargestellt, bei welchen die Amplitude ein Vielfaches der benachbarten Bereiche umfasst. Hierbei kann es sich beispielsweise um lokale geometrische Abweichungen beim Übergang von einer Zahnstange zur benachbarten Zahnstange handeln. Aufgrund der positionsgenauen Angabe der Fehler 35, 36 ist zu entnehmen, dass der Abstand zwischen dem ersten und zweiten Fehler 35, 36 einer Länge der Zahnstange 23 entspricht, die bei dieser Bearbeitungsmaschine 2 zur Bildung des Ritzel-Zahnstangenantriebs 21 verbaut wird. Somit kann aufgrund dieser beiden Fehler 35, 36 ermittelt werden, dass ein Fehler im Übergangsbereich zwischen zwei Zahnstangen 23 liegt und ein Umkehrspiel gegeben ist, welches außerhalb eines Toleranzbereiches liegt.

Aus diesem Diagramm kann des Weiteren gemäß dem im Verhältnis zu den Fehlern 35, 36 kleineren Amplituden 37, 38, 39 erfasst werden, dass sich diese Ausschläge bei größeren Amplituden in regelmäßigen Abständen - also bei jeder Umdrehung des Ritzels 24 - wiederholen. Daraus kann ermittelt werden, dass ein Fehler am Ritzel 24 vorliegen muss, da sich dieser Fehler periodisch mit dem Umfang des Antriebsritzels wiederholt. Sofern die jeweilige Sequenz für die vollständige Umdrehung eines Ritzels 24 vergrößert wird, kann daraufhin festgestellt werden, dass die Amplituden 37, 38, 39 immer an derselben Stelle innerhalb der Sequenz erfolgen, also beispielsweise der dritten Amplitude, sodass daraufhin festgestellt werden kann, dass diese Zustandsänderung immer von demselben Zahn des Ritzels 24 verursacht wird.

In Figur 8 ist eine weitere schematische Darstellung für eine Ermittlung des Zustandes eines Ritzel-Zahnstangenantriebs 21 für eine verfahrbare Achse 14 in der Bearbeitungsmaschine 2 dargestellt. Bei dieser Darstellung ist der Antriebsstrom für eine erste Verfahrrichtung entlang der Achse getrennt zur Verfahrrichtung in entgegengesetzter Richtung dargestellt. Die untere Kennlinie 34 zeigt die Verfahrrichtung beispielsweise in X-Richtung. Die obere Kennlinie 33 zeigt die Verfahrrichtung beispielsweise entgegen der X-Richtung. Die untere Kennlinie 34 umfasst über den gesamten Arbeitsbereich einen homogenen Verlauf mit Ausnahme eines Ereignisses 41. Die obere Kennlinie 33 zeigt wiederum einen homogenen Verlauf mit Ausnahme eines Ereignisses 42. Die Ereignisse 41, 42 sind an derselben Position innerhalb des Arbeitsbereiches, jedoch weichen diese in der Größe der Amplitude voneinander ab. Diese Darstellung ermöglicht eine Auswertung dahingehend, dass ein Verschleiß oder eine Beeinträchtigung bei einem Ritzel-Zahnstangenantrieb 21 aufgrund der voneinander abweichenden einzelnen Ereignisse bezüglich einer möglichen Beschädigung nicht betroffen sind. Im vorliegenden Beispielfall kann ermittelt werden, dass beispielsweise ein Montagefehler, insbesondere bei dem Faltenbalg 18, gegeben ist, der sich aufgrund der Anbindung des Faltenbalges um den Antriebsschlitten 25 oder an einem benachbarten Faltenbalg 18 entlang der Linearachse 15 in entgegengesetzten Richtungen unterschiedlich verhält.

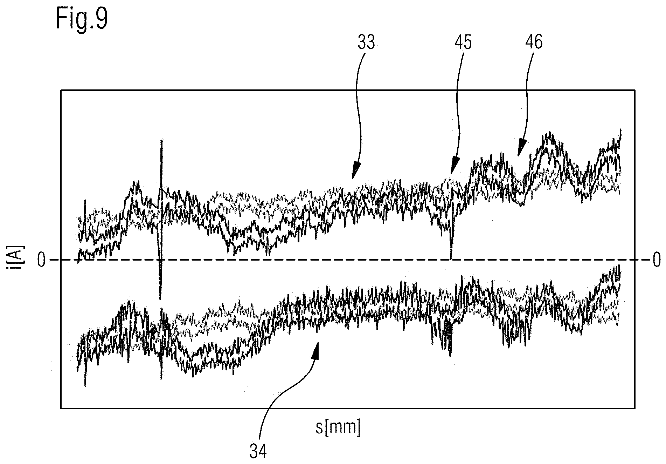

In Figur 9 ist eine weitere schematische Darstellung von Messfahrten entlang des gesamten Arbeitsbereiches dargestellt. Bei dieser Darstellung ist die Hin- und Rückfahrt entlang der Achse wiederum getrennt in der unteren und oberen Kennlinie 33, 34 dargestellt. Die obere und untere Kennlinie 33, 34 zeigen bei derselben Position innerhalb des Arbeitsbereiches zwei gleichgelagerte Fehler 45, 46. Diese deuten darauf hin, dass auch aufgrund des Abstands zwischen den beiden Fehlern die benachbarten Zahnstangen 23 zueinander versetzt sind und ein Fehler im Umkehrspiel vorliegt. Ein Fehler im Umkehrspiel wirkt sich dahingehend aus, dass Geräusche, beispielsweise Schläge oder Schwingungen in der Bearbeitungsmaschine 2, zunehmen. Diese führen zu einer ungenauen Bearbeitung, sodass Konturen an den Werkstücken verletzt oder verrundet werden. Dieser Fehler im Umkehrspiel senkt also die Präzision. Der Ritzel-Zahnstangenantrieb 21 ist auf einen vorgegebenen Toleranzbereich für das Umkehrspiel eingestellt. Die in Figur 9 dargestellte Abweichung bei den Fehlern 45, 46 liegt außerhalb dieses Toleranzbereiches. Dies wird durch die Datenverarbeitungseinrichtung 9 ermittelt. In der Anzeige 12 können die Fehler 45, 46 entsprechend optisch hervorgehoben.

Der Ritzel-Zahnstangenantrieb 21 ermöglicht innerhalb eines Toleranzbereiches einen Spielausgleich. Im Bereich der Fehler 45, 46 kann durch einen Werker eine Einstellung vorgenommen, um diese festgestellten Abweichungen auszugleichen. Darauffolgend werden erneut eine oder mehrere Messfahrten durchgeführt sowie die obere und untere Kennlinie 38, 39 erneut ausgewertet. Sollte der Fehler 45, 46 weiterhin außerhalb des Toleranzbereiches liegen, deutet dies, dass ein Tausch von Komponenten erforderlich wird.

Des Weiteren kann bevorzugt vorgesehen sein, dass nach einer Messfahrt entlang des gesamten Arbeitsbereiches, vorzugsweise entlang einer Hin- und Rückfahrt, durch das Verfahren als Ergebnis Messpositionen ausgegeben werden, an denen ein lokales Messverfahren durchzuführen ist, um einen exakten Wert des Umkehrspiels des Ritzel-Zahnstangenantriebs 21 zu bestimmen. Dies kann beispielsweise die potenziell beste und schlechteste Position im Arbeitsraum sein.

Im Vergleich hierzu ist gemäß Figur 6 ein Diagramm bezüglich derselben Achsposition im Arbeitsbereich zu Figur 5 dargestellt. Ebenso ist die analoge Sequenz 27 aus den erfassten Signalen dargestellt. Aufgrund der oberen und unteren erfassten Messwerte der Amplituden ist ersichtlich, dass diese gegenüber denjenigen in Figur 5 eine größere Streuung aufweisen. Diese in Figur 6 dargestellte Messung ist nach einer längeren Inbetriebnahme der Bearbeitungsmaschine 2 erfolgt. Aufgrund den Abweichungen, beispielsweise der Streuung der Amplituden, gegenüber den Amplituden in Figur 5 wird ein Fehler im Rundlauf des Ritzels 24 zur Zahnstange 23 erfasst. Dieser Zustand kann beispielsweise durch einen Vergleich zwischen der Sequenz 27 in Figur 5 und der Sequenz 27 in Figur 6 erfasst werden, indem beispielsweise die oberen und unteren Messwerte der Amplituden jeweils einen Mittelwert bilden und zu diesem oberen und unteren Mittelwert jeweils eine Streubreite festgelegt wird, innerhalb der die oberen und unteren Messwerte der Amplitude für einen ordnungsgemäßen Rundlauf liegen müssen. Bei der Sequenz 27 gemäß Figur 6 liegen einzelne obere und untere Messwerte der jeweiligen Amplitude außerhalb eines solchen Streubereiches. Dadurch kann der Zustand ermittelt werden, dass der Rundlauf außerhalb der Toleranz liegt.

Figur 7 zeigt eine weitere Auswertung der erfassten Signale zur Zu-standsermittlung des Ritzel-Zahnstangenantriebs 21. Bei dieser Darstellung ist die Messfahrt in und entgegen der Bewegungsrichtung der Linearachse 15 in einer gemeinsamen Kennlinie entlang einer Nullachse in Y-Richtung aufgetragen. Die einzelnen Amplituden sind wiederum positionsgenau zur X-Achse über den gesamten Arbeitsbereich aufgetragen. In diesem Diagramm sind beispielsweise zwei lokale Fehler 35, 36 dargestellt, bei welchen die Amplitude ein Vielfaches der benachbarten Bereiche umfasst. Hierbei kann es sich beispielsweise um lokale geometrische Abweichungen beim Übergang von einer Zahnstange zur benachbarten Zahnstange handeln. Aufgrund der positionsgenauen Angabe der Fehler 35, 36 ist zu entnehmen, dass der Abstand zwischen dem ersten und zweiten Fehler 35, 36 einer Länge der Zahnstange 23 entspricht, die bei dieser Bearbeitungsmaschine 2 zur Bildung des Ritzel-Zahnstangenantriebs 21 verbaut wird. Somit kann aufgrund dieser beiden Fehler 35, 36 ermittelt werden, dass ein Fehler im Übergangsbereich zwischen zwei Zahnstangen 23 liegt und ein Umkehrspiel gegeben ist, welches außerhalb eines Toleranzbereiches liegt.

Aus diesem Diagramm kann des Weiteren gemäß dem im Verhältnis zu den Fehlern 35, 36 kleineren Amplituden 37, 38, 39 erfasst werden, dass sich diese Ausschläge bei größeren Amplituden in regelmäßigen Abständen - also bei jeder Umdrehung des Ritzels 24 - wiederholen. Daraus kann ermittelt werden, dass ein Fehler am Ritzel 24 vorliegen muss, da sich dieser Fehler periodisch mit dem Umfang des Antriebsritzels wiederholt. Sofern die jeweilige Sequenz für die vollständige Umdrehung eines Ritzels 24 vergrößert wird, kann daraufhin festgestellt werden, dass die Amplituden 37, 38, 39 immer an derselben Stelle innerhalb der Sequenz erfolgen, also beispielsweise der dritten Amplitude, sodass daraufhin festgestellt werden kann, dass diese Zustandsänderung immer von demselben Zahn des Ritzels 24 verursacht wird.

In Figur 8 ist eine weitere schematische Darstellung für eine Ermittlung des Zustandes eines Ritzel-Zahnstangenantriebs 21 für eine verfahrbare Achse 14 in der Bearbeitungsmaschine 2 dargestellt. Bei dieser Darstellung ist der Antriebsstrom für eine erste Verfahrrichtung entlang der Achse getrennt zur Verfahrrichtung in entgegengesetzter Richtung dargestellt. Die untere Kennlinie 34 zeigt die Verfahrrichtung beispielsweise in X-Richtung. Die obere Kennlinie 33 zeigt die Verfahrrichtung beispielsweise entgegen der X-Richtung. Die untere Kennlinie 34 umfasst über den gesamten Arbeitsbereich einen homogenen Verlauf mit Ausnahme eines Ereignisses 41. Die obere Kennlinie 33 zeigt wiederum einen homogenen Verlauf mit Ausnahme eines Ereignisses 42. Die Ereignisse 41, 42 sind an derselben Position innerhalb des Arbeitsbereiches, jedoch weichen diese in der Größe der Amplitude voneinander ab. Diese Darstellung ermöglicht eine Auswertung dahingehend, dass ein Verschleiß oder eine Beeinträchtigung bei einem Ritzel-Zahnstangenantrieb 21 aufgrund der voneinander abweichenden einzelnen Ereignisse bezüglich einer möglichen Beschädigung nicht betroffen sind. Im vorliegenden Beispielfall kann ermittelt werden, dass beispielsweise ein Montagefehler, insbesondere bei dem Faltenbalg 18, gegeben ist, der sich aufgrund der Anbindung des Faltenbalges um den Antriebsschlitten 25 oder an einem benachbarten Faltenbalg 18 entlang der Linearachse 15 in entgegengesetzten Richtungen unterschiedlich verhält.

In Figur 9 ist eine weitere schematische Darstellung von Messfahrten entlang des gesamten Arbeitsbereiches dargestellt. Bei dieser Darstellung ist die Hin- und Rückfahrt entlang der Achse wiederum getrennt in der unteren und oberen Kennlinie 33, 34 dargestellt. Die obere und untere Kennlinie 33, 34 zeigen bei derselben Position innerhalb des Arbeitsbereiches zwei gleichgelagerte Fehler 45, 46. Diese deuten darauf hin, dass auch aufgrund des Abstands zwischen den beiden Fehlern die benachbarten Zahnstangen 23 zueinander versetzt sind und ein Fehler im Umkehrspiel vorliegt. Ein Fehler im Umkehrspiel wirkt sich dahingehend aus, dass Geräusche, beispielsweise Schläge oder Schwingungen in der Bearbeitungsmaschine 2, zunehmen. Diese führen zu einer ungenauen Bearbeitung, sodass Konturen an den Werkstücken verletzt oder verrundet werden. Dieser Fehler im Umkehrspiel senkt also die Präzision. Der Ritzel-Zahnstangenantrieb 21 ist auf einen vorgegebenen Toleranzbereich für das Umkehrspiel eingestellt. Die in Figur 9 dargestellte Abweichung bei den Fehlern 45, 46 liegt außerhalb dieses Toleranzbereiches. Dies wird durch die Datenverarbeitungseinrichtung 9 ermittelt. In der Anzeige 12 können die Fehler 45, 46 entsprechend optisch hervorgehoben.

Der Ritzel-Zahnstangenantrieb 21 ermöglicht innerhalb eines Toleranzbereiches einen Spielausgleich. Im Bereich der Fehler 45, 46 kann durch einen Werker eine Einstellung vorgenommen, um diese festgestellten Abweichungen auszugleichen. Darauffolgend werden erneut eine oder mehrere Messfahrten durchgeführt sowie die obere und untere Kennlinie 38, 39 erneut ausgewertet. Sollte der Fehler 45, 46 weiterhin außerhalb des Toleranzbereiches liegen, deutet dies, dass ein Tausch von Komponenten erforderlich wird.

Des Weiteren kann bevorzugt vorgesehen sein, dass nach einer Messfahrt entlang des gesamten Arbeitsbereiches, vorzugsweise entlang einer Hin- und Rückfahrt, durch das Verfahren als Ergebnis Messpositionen ausgegeben werden, an denen ein lokales Messverfahren durchzuführen ist, um einen exakten Wert des Umkehrspiels des Ritzel-Zahnstangenantriebs 21 zu bestimmen. Dies kann beispielsweise die potenziell beste und schlechteste Position im Arbeitsraum sein.

## Patentansprüche

1. Verfahren zur Ermittlung des Zustandes eines Ritzel-Zahnstangenantriebs (21) für eine verfahrbare Achse (14) in einer Bearbeitungsmaschine (2),
- bei dem zumindest eine Messfahrt der verfahrbaren Achse (14) über den gesamten Arbeitsbereich einer Linearachse (15) durchgeführt wird,
- bei dem die Messfahrt durch eine Verfahrbewegung der verfahrbaren Achse (14) mit einer konstanten Vorschubgeschwindigkeit in beiden Bewegungsrichtungen jeweils über den gesamten Arbeitsbereich der Linearachse (15) angesteuert wird,
- bei dem während der Messfahrt Signale in Abhängigkeit der Achspositionen der verfahrbaren Achse (14) zur Linearachse (15) erfasst werden,
- bei dem die erfassten Signale in Abhängigkeit der Achsposition in einer Datenverarbeitungseinrichtung (9) ausgewertet und mittels eines mathematischen Verfahrens analysiert werden, wobei ein Vergleich der Signale erfolgt, welche aus den beiden Bewegungsrichtungen erfasst wurden.

2. Verfahren nach Anspruch 1, **dadurch gekennzeichnet, dass** mehrere Messfahrten aufeinanderfolgend angesteuert werden und jede der Messfahrten mit einer eigenen und von der vorausgehenden Messfahrt abweichenden Vorschubgeschwindigkeit angesteuert wird.

3. Verfahren nach einem der vorhergehenden Ansprüche, **dadurch gekennzeichnet, dass** während der zumindest einen Messfahrt als Signal in Abhängigkeit der Achsposition der Linearachse (15) ein momentenbildender Antriebsstrom eines Motors (22) des Ritzel-Zahnstangenantriebs (21) erfasst wird.

4. Verfahren nach Anspruch 3, **dadurch gekennzeichnet, dass** die Drehzahl des Motors (22) und/oder zumindest ein weiteres Messsignal, insbesondere durch einen Beschleunigungssensor oder ein direktes Wegmesssystem, in Abhängigkeit der Achsposition entlang der Linearachse (15) erfasst werden.

5. Verfahren nach einem der vorhergehenden Ansprüche, **dadurch gekennzeichnet, dass** während der Messfahrt mit der konstanten Vorschubgeschwindigkeit Signale von einer Beschleunigungs- und Bremsphase zu Beginn und am Ende des Arbeitsbereiches nicht erfasst werden.

6. Verfahren nach einem der vorhergehenden Ansprüche, **dadurch gekennzeichnet, dass** während der Messfahrt momentane Messwerte des Antriebsstromes des Motors (22) erfasst und in Abhängigkeit der Achspositionen der Linearachse (15) dargestellt werden.

7. Verfahren nach Anspruch 6, **dadurch gekennzeichnet, dass** der Eingriff eines Zahnes des Ritzels (24) in die Zahnstange (23) durch eine periodische Zuordnung über den Umfang des Ritzels, vorzugsweise in der Darstellung von Amplituden entsprechend zur Achsposition erfasst und aufgezeichnet wird.

8. Verfahren nach Anspruch 7, **dadurch gekennzeichnet, dass** die periodische Zuordnung für jede vollständige Umdrehung des Ritzels (24) in einer Farbe ausgegeben werden, die von der vorherigen abweicht.

9. Verfahren nach einem der vorhergehenden Ansprüche, **dadurch gekennzeichnet, dass** durch das mathematische Verfahren jeweils eine Einhüllende aus den oberen und unteren Messwerten von den erfassten Amplituden des Antriebsstromes gebildet und in der Anzeige ausgegeben wird.

10. Verfahren nach Anspruch 9, **dadurch gekennzeichnet, dass** jeweils aus den oberen Messwerten der Amplituden und den unteren Messwerten der Amplituden ein oberer und unterer Mittelwert gebildet wird sowie die Einhüllende und die durch die Mittelwerte gebildeten Geraden angezeigt werden und für die Analyse korreliert werden.

11. Verfahren nach einem der vorhergehenden Ansprüche, **dadurch gekennzeichnet, dass** die erste und zumindest eine weitere Messfahrt in zeitlichen Abständen, insbesondere täglich, wöchentlich und/oder monatlich, durchgeführt und durch einen Vergleich der in der Gesamtheit erfassten Amplituden über den gesamten Arbeitsbereich zumindest eine Zustandsänderung erfasst und vorzugsweise vorausschauend ermittelt wird.

12. Verfahren nach einem der vorhergehenden Ansprüche, **dadurch gekennzeichnet, dass** als Zustand ein Zahnverschleiß, ein Zahnbruch, ein Rundlauffehler, ein Umkehrspiel, ein Montagefehler beim Übergang von zwei aneinandergereihten Zahnstangen, ein lokaler Defekt einer Zahnstange, ein Montagefehler oder Defekt in weiteren Komponenten der verfahrbaren Achse (14), insbesondere des Linearführungssystems, und/oder der Linearachse (15) erfasst und ausgewertet wird.

13. Verfahren nach einem der vorhergehenden Ansprüche, **dadurch gekennzeichnet, dass** als Ergebnis der Analyse der Messsignale durch die Datenverarbeitungseinrichtung (9) Messpositionen ausgegeben werden, an denen durch ein lokales Messverfahren die exakten Werte, insbesondere ein exakter Wert eines Umkehrspiels des Ritzel-Zahnstangenantriebs (21), zu bestimmen ist.

14. Bearbeitungsmaschine (2) mit einem Ritzel-Zahnstangenantrieb (21) für eine verfahrbare Achse (14) entlang einer Linearachse (15), wobei die Bearbeitungsmaschine (2) zumindest eine Datenverarbeitungseinrichtung aufweist, welche zur Durchführung eines Verfahrens nach einem der vorhergehenden Ansprüche eingerichtet, wobei die Datenverarbeitungseinrichtung während zumindest einer Messfahrt erfassten Signale in Abhängigkeit der Achspositionen über den gesamten Arbeitsbereich erfasst und auswertet sowie mittels eines mathematischen Verfahrens analysiert.

## Claims

1. A method for determining the state of a rack and pinion drive (21) for a movable axis (14) in a processing machine (2),
- in which at least one measurement run of the movable axis (14) is carried out over the entire working range of a linear axis (15),
- in which the measurement run is initiated when the movable axis (14) travels with a constant rate of advancement in both directions of motion over the entire working range of the linear axis (15) in each case,
- in which, during the measurement run, signals are detected as a function of the axial positions of the movable axis (14) relative to the linear axis (15),
- in which the detected signals as a function of the axial position are evaluated in a data processing device (9) and are analyzed by means of a mathematical method, wherein a comparison takes place of the signals detected from both movement directions.

2. The method according to claim 1, **characterized in that** a plurality of measurement runs are initiated one after the other, and each of the measurement runs is initiated with its own rate of advancement that differs from the prior measurement run.

3. The method according to any one of the preceding claims, **characterized in that** during the at least one measurement run a torque-forming drive current of a motor (22) of the rack and pinion drive (21) is detected as the signal as a function of the axial position of the linear axis (15).

4. The method according to claim 3, **characterized in that** the speed of the motor (22) and/or at least a further measurement signal are detected, in particular by way of an acceleration sensor or a direct path measuring system, as a function of the axial position along the linear axis (15).

5. The method according to any one of the preceding claims, **characterized in that**, during the measurement run at the constant rate of advancement, signals from an acceleration and braking phase at the beginning and the end of the working range are not detected.

6. The method according to any one of the preceding claims, **characterized in that**, during the measurement run, instantaneous measured values of the drive current of the motor (22) are detected and represented as a function of the axial positions of the linear axis (15).

7. The method according to claim 6, **characterized in that** the engagement of a tooth of the pinion (24) in the rack (23) is detected and recorded by way of a periodic assignment over the circumference of the pinion, preferably in the representation of amplitudes corresponding to the axial position.

8. The method according to claim 7, **characterized in that** for each full rotation of the pinion (24) the periodic assignment is output in a color that differs from the prior color.

9. The method according to any one of the preceding claims, **characterized in that** the mathematical method forms an enveloping end from the upper and lower measured values, respectively, of the detected amplitudes of the drive current, and these ends are output in the display.

10. The method according to claim 9, **characterized in that** an upper and lower mean value is formed from the upper measured values of the amplitudes and the lower measured values of the amplitudes, respectively, and the envelope ends and the straight lines formed by the mean values are displayed and correlated for the analysis.

11. The method according to any one of the preceding claims, **characterized in that** the first and at least one further measurement run is carried out in time intervals, in particular daily, weekly and/or monthly, and at least one state change is detected and preferably determined in advance by comparing the amplitudes detected overall over the entire working range.

12. The method according to any one of the preceding claims, **characterized in that** the state that is detected and evaluated is a tooth wear, a tooth breakage, a concentricity error, a backlash, an assembly error in the transition between two racks lined up next to one another, a local defect in a toothed rack, an assembly error or a defect in other components of the movable axis (14), in particular the linear guiding system, and/or the linear axis (15).

13. The method according to any one of the preceding claims, **characterized in that** measurement positions at which the exact values, in particular an exact value of a backlash of the rack and pinion drive (21), is to be determined by a local measuring method, are output as the result of the analysis of the measurement signals by the data processing device (9).

14. A processing machine (2) with a rack and pinion drive (21) for a movable axis (14) along a linear axis (15), wherein the processing machine (2) has at least one data processing device which is configured to carry out a method according to any one of the preceding claims, wherein the data processing device detects and evaluates signals detected during at least one measuring run, as a function of the axial positions along the entire working range, and also analyzes them by means of a mathematical method.

## Revendications

1. Procédé de détermination de l'état d'un entraînement pignon-crémaillère (21) pour un axe mobile (14) d'une machine d'usinage (2),
- dans lequel au moins un parcours de mesure de l'axe mobile (14) est effectué sur toute la plage de travail d'un axe linéaire (15),
- dans lequel le parcours de mesure est commandé par un mouvement de déplacement de l'axe mobile (14) à une vitesse d'avance constante dans les deux sens de déplacement, respectivement sur toute la plage de travail de l'axe linéaire (15),
- dans lequel, pendant le parcours de mesure, des signaux sont enregistrés en fonction des positions de l'axe mobile (14) par rapport à l'axe linéaire (15),
- dans lequel les signaux enregistrés sont évalués en fonction de la position de l'axe dans un dispositif de traitement de données (9) et analysés au moyen d'un procédé mathématique, dans lequel une comparaison des signaux est effectuée, lesquels ont été enregistrés à partir des deux sens de déplacement.

2. Procédé selon la revendication 1, **caractérisé en ce que** plusieurs parcours de mesure sont commandés successivement et que chacun des parcours de mesure est commandé avec une vitesse d'avance propre différente de celle du parcours de mesure précédent.

3. Procédé selon l'une quelconque des revendications précédentes, **caractérisé en ce que**, pendant l'au moins un parcours de mesure, un courant d'entraînement générateur de couple d'un moteur (22) de l'entraînement pignon-crémaillère (21) est enregistré en tant que signal en fonction de la position de l'axe linéaire (15).

4. Procédé selon la revendication 3, **caractérisé en ce que** la vitesse de rotation du moteur (22) et/ou au moins un autre signal de mesure, en particulier par un capteur d'accélération ou un système de mesure directe de la course, sont enregistrés en fonction de la position de l'axe le long de l'axe linéaire (15).

5. Procédé selon l'une quelconque des revendications précédentes, **caractérisé en ce que**, pendant le parcours de mesure à vitesse d'avance constante, les signaux d'une phase d'accélération et de freinage au début et à la fin de la plage de travail ne sont pas enregistrés.

6. Procédé selon l'une quelconque des revendications précédentes, **caractérisé en ce que**, pendant le parcours de mesure, les valeurs de mesure instantanées du courant d'entraînement du moteur (22) sont enregistrées et représentées en fonction des positions de l'axe linéaire (15).

7. Procédé selon la revendication 6, **caractérisé en ce que** l'engrènement d'une dent du pignon (24) dans la crémaillère (23) est enregistré et mémorisé par une attribution périodique sur la circonférence du pignon, préférablement sous forme d'amplitudes correspondant à la position de l'axe.

8. Procédé selon la revendication 7, **caractérisé en ce que** l'attribution périodique est affichée pour chaque tour complet du pignon (24) dans une couleur différente de la précédente.

9. Procédé selon l'une quelconque des revendications précédentes, **caractérisé en ce qu'**une enveloppe respective est formée, au moyen du procédé mathématique, à partir des valeurs de mesure supérieures et inférieures des amplitudes du courant d'entraînement enregistrées, et est affichée à l'écran.

10. Procédé selon la revendication 9, **caractérisé en ce qu'**une valeur moyenne supérieure et une valeur moyenne inférieure sont formées respectivement à partir des valeurs de mesure supérieures des amplitudes et des valeurs de mesure inférieures des amplitudes, et **en ce que** l'enveloppe et les droites formées par les valeurs moyennes sont affichées et corrélées pour l'analyse.

11. Procédé selon l'une quelconque des revendications précédentes, **caractérisé en ce que** le premier parcours de mesure et au moins un autre parcours de mesure sont effectués à intervalles réguliers, en particulier quotidiennement, hebdomadairement et/ou mensuellement, et que, par comparaison des amplitudes enregistrées dans leur ensemble sur toute la plage de travail, au moins un changement d'état est enregistré et, préférablement, déterminé de manière prédictive.

12. Procédé selon l'une quelconque des revendications précédentes, **caractérisé en ce que** l'état enregistré et évalué est une usure de dent, une rupture de dent, un défaut de concentricité, un jeu de retournement, un défaut de montage au niveau de la transition entre deux crémaillères juxtaposées, un défaut local d'une crémaillère, un défaut de montage ou un défaut dans d'autres composants de l'axe mobile (14), en particulier du système de guidage linéaire, et/ou de l'axe linéaire (15).

13. Procédé selon l'une quelconque des revendications précédentes, **caractérisé en ce que**, comme résultat de l'analyse des signaux de mesure par le dispositif de traitement de données (9), des positions de mesure sont affichées, auxquelles des valeurs exactes, en particulier une valeur exacte d'un jeu de retournement de l'entraînement pignon-crémaillère (21), doivent être déterminées par un procédé de mesure local.

14. Machine d'usinage (2) munie d'un entraînement pignon-crémaillère (21) pour un axe mobile (14) le long d'un axe linéaire (15), dans laquelle la machine d'usinage (2) présente au moins un dispositif de traitement de données, lequel est conçu pour exécuter un procédé selon l'une quelconque des revendications précédentes, dans laquelle le dispositif de traitement de données enregistre et évalue des signaux enregistrés pendant au moins un parcours de mesure en fonction des positions des axes sur toute la plage de travail et les analyse au moyen d'un procédé mathématique.
